# EUROPEAN PATENT APPLICATION

(11) **EP 4 782 934 A1**
(43) Date of publication of application: **29.07.2026**
(21) Application number: 25224315.9
(22) Date of filing: 17.12.2025
(51) Int. Cl.: G03G 15/20

(54) **FIXING DEVICE AND IMAGE FORMING APPARATUS**

(30) Priority: 24.01.2025 JP 2025010974
(71) Applicant: FUJIFILM Business Innovation Corp., Minato-ku Tokyo (JP)
(72) Inventor: NAITO, Yasutaka, Ebina-shi, Kanagawa (JP); TAIRA, Seiji, Ebina-shi, Kanagawa (JP); KINUTA, Yasuhiko, Ebina-shi, Kanagawa (JP)
(74) Representative: Becker Kurig & Partner Patentanwälte mbB

(57) **Abstract**

A fixing device includes a heating member that has a base material and a surface layer provided on the base material, a pressurizing member that comes into contact with the heating member and applies pressure to the heating member, and a peeling claw that is provided on a downstream side of the heating member in a rotation direction of the heating member with respect to a contact portion between the heating member and the pressurizing member, and peels a recording medium that is passed through the contact portion between the heating member and the pressurizing member from the heating member by coming into contact with the heating member, in which the surface layer of the heating member is a layer having a T unit represented by a formula: [R¹SiO_{3/2}]ₘ (in the formula, R¹ represents an organic group, and m represents an integer of 2 or more), and contains inorganic particles having an average particle diameter of 7.0 µm or less.

## Description

### BACKGROUND OF THE INVENTION

### (i) Field of the Invention

The present invention relates to a fixing device and an image forming apparatus.

### (ii) Description of Related Art

In an image forming apparatus (such as a copy machine, a facsimile machine, and a printer) using an electrophotographic method, a toner image formed on a surface of an image holder is transferred to the surface of a recording medium and fixed on the recording medium such that an image is formed.

For example, JP2007-310238A discloses "fixing device including a fixing member that a core material and a coating layer covering the core material, in which a wear-resistant additive having an average particle diameter of 1 µm or less is dispersed". JP2007-310238A also discloses a peeling claw that peels a recording medium from the fixing member.

In addition, JP2617858B discloses "fixing device including an elastic roller that fixes an unfixed toner image carried on a recording material to the recording material, the elastic roller including a core member and an elastic layer formed of an addition-type silicone rubber elastic material on a surface side of the core member".

### SUMMARY OF THE INVENTION

In the related art, a fixing device including a heating member, a pressurizing member, and a peeling claw (hereinafter, also referred to as "specific fixing device") is known.

The heating member is a member including a base material and a surface layer provided on the base material.

The pressurizing member is a member that comes into contact with the heating member and applies pressure to the heating member.

The peeling claw is provided on a downstream side of the heating member in a rotation direction of the heating member with respect to a contact portion between the heating member and the pressurizing member, and peels a recording medium that is passed through the contact portion between the heating member and the pressurizing member, from the heating member by coming into contact with the heating member.

An object of the present invention is to provide a fixing device in which toner offset is suppressed and a heating member has high abrasion resistance, as compared with a case where, in the specific fixing device, a surface layer of the heating member is a layer having a T unit represented by a formula: [R¹SiO_{3/2}]ₘ, and does not contain inorganic particles or contains inorganic particles having an average particle diameter of more than 7.0 µm.

Methods for achieving the above object include the following aspects.
<1> According to a first aspect of the present disclosure, there is provided a fixing device including:
   a heating member that has a base material and a surface layer provided on the base material;
   a pressurizing member that comes into contact with the heating member and applies pressure to the heating member; and
   a peeling claw that is provided on a downstream side of the heating member in a rotation direction of the heating member with respect to a contact portion between the heating member and the pressurizing member, and peels a recording medium that is passed through the contact portion between the heating member and the pressurizing member from the heating member by coming into contact with the heating member,
   in which the surface layer of the heating member is a layer having a T unit represented by a formula: [R¹SiO_{3/2}]ₘ (in the formula, R¹ represents an organic group, and m represents an integer of 2 or more), and contains inorganic particles having an average particle diameter of 7.0 µm or less.
<2> According to a second aspect of the present disclosure, there is provided the fixing device according to <1>,
   in which a content of the T unit with respect to the surface layer may be 20% by volume or more.
<3> According to a third aspect of the present disclosure, there is provided the fixing device according to <2>,
   in which the content of the T unit with respect to the surface layer may be 30% by volume or more.
<4> According to a fourth aspect of the present disclosure, there is provided the fixing device according to any one of <1> to <3>,
   in which a content of the inorganic particles with respect to the surface layer may be 3% by mass or more and 20% by mass or less.
<5> According to a fifth aspect of the present disclosure, there is provided the fixing device according to <4>,
   in which the content of the inorganic particles with respect to the surface layer may be 10% by mass or more and 15% by mass or less.
<6> According to a sixth aspect of the present disclosure, there is provided the fixing device according to any one of <1> to <5>,
   in which the inorganic particles may be silicon carbide particles.
<7> According to a seventh aspect of the present disclosure, there is provided the fixing device according to any one of <1> to <6>,
   in which a surface layer containing a silicone material may be provided on a surface of the contact portion with the heating member in the peeling claw.
<8> According to an eighth aspect of the present disclosure, there is provided an image forming apparatus including:
   an image holder;
   a charging device that charges a surface of the image holder;
   an electrostatic latent image forming device that forms an electrostatic latent image on the charged surface of the image holder;
   a developing device that accommodates a developer containing a toner and develops the electrostatic latent image formed on the surface of the image holder with the developer to form a toner image;
   a transfer device that transfers the toner image onto a surface of a recording medium; and
   the fixing device according to any one of <1> to <7>, that fixes the toner image on the surface of the recording medium.

According to <1>, there is provided a fixing device in which toner offset is suppressed and a heating member has high abrasion resistance, as compared with a case where, in the specific fixing device, the surface layer of the heating member is a layer having the T unit represented by the formula: [R¹SiO_{3/2}]ₘ, and does not contain inorganic particles or contains inorganic particles having an average particle diameter of more than 7.0 µm.

According to <2>, there is provided a fixing device in which toner offset is suppressed and a heating member has high abrasion resistance, as compared with a case where the content of the T unit with respect to the surface layer is less than 20% by volume.

According to <3>, there is provided a fixing device in which toner offset is suppressed and a heating member has high abrasion resistance, as compared with a case where the content of the T unit with respect to the surface layer is less than 30% by volume.

According to <4>, there is provided a fixing device in which toner offset is further suppressed and a heating member has high abrasion resistance, as compared with a case where the content of the inorganic particles with respect to the surface layer is less than 3% by mass or more than 20% by mass.

According to <5>, there is provided a fixing device in which toner offset is further suppressed and a heating member has high abrasion resistance, as compared with a case where the content of the inorganic particles with respect to the surface layer is less than 10% by mass or more than 15% by mass.

According to <6>, there is provided a fixing device in which toner offset is further suppressed and a heating member has high abrasion resistance, as compared with a case where the inorganic particles are carbon black.

According to <7>, there is provided a fixing device in which occurrence of black spots is suppressed together with toner offset and a heating member has high abrasion resistance, as compared with a case where the surface layer containing a silicone material is not provided on the surface of the contact portion with the heating member in the peeling claw.

According to <8>, there is provided an image forming apparatus including a fixing device in which toner offset is suppressed and a heating member has high abrasion resistance, as compared with a case of including a fixing device in which, in the specific fixing device, the surface layer of the heating member is a layer having the T unit represented by the formula: [R¹SiO_{3/2}]ₘ, and does not contain inorganic particles or contains inorganic particles having an average particle diameter of more than 7.0 µm.

### BRIEF DESCRIPTION OF THE DRAWINGS

Exemplary embodiment(s) of the present invention will be described in detail based on the following figures, wherein:
FIG. 1 is a view schematically showing a configuration of an example of a fixing device according to the present exemplary embodiment; and
FIG. 2 is a view schematically showing a configuration of an example of an image forming apparatus according to the present exemplary embodiment.

### DETAILED DESCRIPTION OF THE INVENTION

Hereinafter, present exemplary embodiments of the present invention will be described. The following descriptions and examples merely illustrate the exemplary embodiments, and do not limit the scope of the exemplary embodiments.

Regarding the numerical ranges described in stages in the present exemplary embodiment, the upper limit value or lower limit value of a numerical range may be replaced with the upper limit value or lower limit value of another numerical range described in stages. In addition, in the present exemplary embodiment, the upper limit value or lower limit value of a numerical range may be replaced with values described in examples.

In the present exemplary embodiments, the term "step" includes not only an independent step but a step which is not clearly distinguished from other steps as long as the intended purpose of the step is achieved.

In the present exemplary embodiment, in a case where an exemplary embodiment is described with reference to drawings, the configuration of the exemplary embodiment is not limited to the configuration shown in the drawings. In addition, the sizes of members in each drawing are conceptual and do not limit the relative relationship between the sizes of the members.

In the present exemplary embodiments, each component may include a plurality of corresponding substances. In the present exemplary embodiment, in a case where the amount of each component in a composition is mentioned, and there are two or more kinds of substances corresponding to each component in the composition, unless otherwise specified, the amount of each component means the total amount of two or more kinds of the substances present in the composition.

### <Fixing Device>

The fixing device according to the present exemplary embodiment includes a heating member, a pressurizing member, and a peeling claw.

The heating member is a member including a base material and a surface layer provided on the base material.

The pressurizing member is a member that comes into contact with the heating member and applies pressure to the heating member.

The peeling claw is provided on a downstream side of the heating member in a rotation direction of the heating member with respect to a contact portion between the heating member and the pressurizing member, and peels a recording medium that is passed through the contact portion between the heating member and the pressurizing member, from the heating member by coming into contact with the heating member.

The surface layer of the heating member is a layer having a T unit represented by a formula: [R¹SiO_{3/2}]ₘ (in the formula, R¹ represents an organic group, and m represents an integer of 2 or more), and contains inorganic particles having an average particle diameter of 7.0 µm or less.

Since the fixing device according to the present exemplary embodiment has the above-described configuration, toner offset is suppressed and the heating member has high abrasion resistance. The reason is presumed as follows.

In recent years, due to increased awareness of sustainable development goals (SDGs), the developments of materials with reduced environmental burden have been promoted. One of techniques is to use a polysiloxane compound.

In the fixing device, in a case where a polysiloxane compound is used in the surface layer of the heating member and the surface layer having the above-described T unit is adopted, release properties of the surface are improved. As a result, toner offset is less likely to occur. The toner offset refers to a phenomenon in which a toner fixed onto the recording medium adheres to the fixing member.

On the other hand, the surface layer having the above-described T unit has low abrasion resistance. In particular, in the fixing device including the peeling claw, since the peeling claw comes into contact with the surface layer of the heating member while the heating member rotates, the surface layer is easily worn. Therefore, it is required to improve the abrasion resistance of the heating member (that is, the surface layer).

Therefore, in the fixing member according to the present exemplary embodiment, the surface layer having the above-described T unit contains inorganic particles having an average particle diameter in the above-described range. As a result, the hardness of the surface layer is improved, and the release properties of the surface layer are not easily reduced due to the inclusion of the inorganic particles while the abrasion resistance is improved.

Therefore, it is presumed that the fixing device according to the present exemplary embodiment is a fixing device in which the toner offset is suppressed and the abrasion resistance of the heating member is high.

Hereinafter, details of the fixing device according to the present exemplary embodiment will be described.

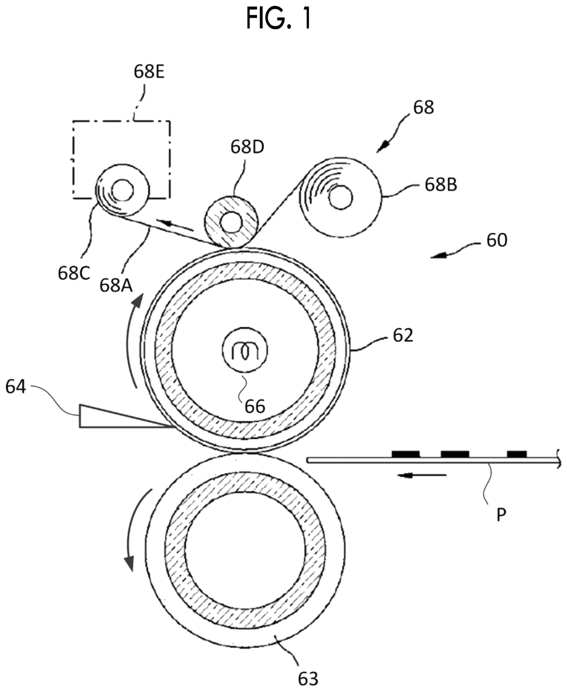

FIG. 1 is a view schematically showing a configuration of an example of the fixing device according to the present exemplary embodiment.

A fixing device 60 shown in FIG. 1 includes a heating roll 62 (an example of the heating member), a pressurizing roll 63 (an example of the pressurizing member), and a peeling claw 64.

A heating source 66 that heats the heating roll 62 is provided inside the heating roll 62.

A cleaning device 68 that cleans the surface of the heating roll 62 is provided around the heating roll 62.

In the fixing device 60, the heating roll 62 and the pressurizing roll 63 are disposed to be freely rotatable. The heating roll 62 is connected to a drive source (for example, a motor; not shown) through a power transmission member (a gear or the like; not shown). The power generated by the drive source (for example, a motor) is transmitted to the heating roll 62 by the power transmission member (a gear or the like). As a result, the heating roll 62 is rotationally driven in a direction of an arrow C.

The pressurizing roll 63 is disposed to be pressed against the heating roll 62 by a spring or the like (not shown). The pressurizing roll 63 is rotationally driven in response to the rotational driving of the heating roll.

The peeling claw 64 is provided on a downstream side of the heating roll 62 in a rotation direction (that is, a downstream side of paper P in a transport direction) with respect to a contact portion between the heating roll 62 and the pressurizing roll 63. The peeling claw 64 comes into contact with the heating roll 62 and peels, from the heating roll 62, the paper P that has passed through the contact portion between the heating member and the pressurizing member. As a result, the paper P is prevented from being wound around the heating roll 62. In order to perform the function, a distal end portion of the peeling claw 64 is pressed against the surface of the heating roll 62 by a spring or the like (not shown).

In the fixing device 60, the cleaning device 68 cleans the toner, paper dust, or the like, adhering to the surface of the heating roll 62.

In the state, paper (an example of the recording medium) P on which an unfixed toner image is transferred enters a contact portion between the heating roll 62 heated by the heating source 66 and the pressurizing roll 63 by a transport mechanism (not shown).

The toner image transferred to the paper P is heated and pressed in the contact portion between the heating roll 62 and the pressurizing roll 63. As a result, the toner image is fixed to the paper P.

In a case where the paper P after fixing is wound around the heating roll 62, the paper P is peeled off from the heating roll 62 by the peeling claw 64.

Hereinafter, main members of the fixing device 60 will be described in detail.

### (Heating Roll)

Examples of the heating roll 62 include a roll including a base material and a surface layer provided on the base material.

### -Base Material-

Examples of the base material include a cylindrical base material formed of a metal (aluminum, SUS, iron, copper, or the like), an alloy, ceramics, a fiber-reinforced metal (FRM), or the like.

An outer diameter and a thickness of the cylindrical base material may be, for example, an outer diameter of 10 mm or more and 100 mm or less. In a case of the aluminum cylindrical base material, the thickness may be, for example, 0.5 mm or more and 15 mm or less; and in a case of the SUS (stainless steel) cylindrical base material or the iron cylindrical base material, the thickness may be, for example, 0.1 mm or more and 12 mm or less.

An adhesive may be applied onto a surface of the base material. That is, the adhesive is used as necessary, and the base material and the surface layer may be laminated with the adhesive interposed therebetween. The adhesive is not particularly limited, and examples thereof include an adhesive compound having a hydrogen-bonding silyl group (-SiH) in which a hydrogen atom is bonded.

### -Surface Layer-

The surface layer is a layer having a T unit represented by a formula: [R¹SiO_{3/2}]ₘ and contains inorganic particles having an average particle diameter of 7.0 µm or less.

### --T Unit Represented by Formula: [R¹SiO_{3/2}]ₘ--

The T unit is represented by a formula: [R¹SiO_{3/2}]ₘ, in which R¹ represents an organic group, and m represents an integer of 2 or more.

In the T unit, in particular, at least one R¹ among the plurality of R¹'s present in the T unit is, for example, preferably a group including at least one of an alkyl group or an aryl group, and more preferably a group including an alkyl group. By the at least one R¹ being a group including at least one of an alkyl group or an aryl group, the release properties of the surface layer are improved. As a result, the toner offset is more likely to be suppressed.

The surface layer may have a D unit represented by a formula: (R²R³SiO_{2/2})ₙ (in the formula, R² and R³ represent organic groups, and n represents an integer of 2 or more) together with the T unit represented by the formula: [R¹SiO_{3/2}]ₘ. In a case where the D unit is included, a flexible surface layer is obtained.

From the viewpoint of suppressing the toner offset, at least one R² or R³ among the plurality of R²'s and R³'s present in the D unit are, for example, preferably a group including at least one of an alkyl group or an aryl group, and more preferably a group including an alkyl group.

In the T unit and the D unit, the organic group of R¹, R², and R³ in the formulae represents, for example, a hydroxyl group, a siloxy group, a hydrocarbon group, a hydrocarbon group in which one or a plurality of methylene groups are replaced with a carbonyl group, a hydrocarbon group in which one or a plurality of carbon atoms are replaced with a heteroatom (an oxygen atom, a nitrogen atom, or a sulfur atom), or a group obtained by combining these groups.

Examples of the siloxy group described as the organic group represented by R¹, R², and R³ include a monoalkylsiloxy group, a dialkylsiloxy group, and a trialkylsiloxy group; and for example, a dialkylsiloxy group or a trialkylsiloxy group is preferable, and a trialkylsiloxy group is more preferable.

Examples of the hydrocarbon group described as the organic group represented by R¹, R², and R³ include an aliphatic hydrocarbon group and an aromatic hydrocarbon group.

Examples of the aliphatic hydrocarbon group include a linear, branched, or alicyclic saturated aliphatic hydrocarbon group, and a linear, branched, or alicyclic unsaturated aliphatic hydrocarbon group.

The aliphatic hydrocarbon group is, for example, preferably a hydrocarbon group having 1 or more and 20 or less carbon atoms, and more preferably a hydrocarbon group having 1 or more and 15 or less carbon atoms.

The aliphatic hydrocarbon group may be substituted with a substituent such as a halogen atom, a hydroxyl group, an amino group, and an aryl group.

Examples of the aromatic hydrocarbon group include a hydrocarbon group having 6 or more and 18 or less carbon atoms (for example, preferably 6 or more and 14 or less carbon atoms). Examples of the aromatic hydrocarbon group include a phenyl group, a naphthyl group, and an anthracenyl group.

The aromatic hydrocarbon group may be substituted with a substituent such as a halogen atom, a hydroxyl group, an amino group, an alkyl group, and an alkoxy group.

The organic group represented by R¹, R², and R³ may have a reactive group. Examples of the reactive group include a vinyl group, an allyl group, a styryl group, a maleimide group, an epoxy group, and a (meth)acryloyl group. That is, in the surface layer, the T units may be linked by a reaction between reactive groups.

A plurality of R¹'s, R²'s, and R³'s present in the T unit and the D unit may be the same organic group or different organic groups.

However, at least one R¹, R², or R³ among the plurality of R¹'s, R²'s, and R³'s present in the T unit is a group including at least one of an alkyl group or an aryl group.

In addition, at least one R¹, R², or R³ among the plurality of R¹'s, R²'s, and R³'s present in the D unit is, for example, preferably a group including at least one of an alkyl group or an aryl group.

That is, at least one R¹ among the plurality of R¹'s present in the T unit is a group including at least one of an alkyl group or an aryl group.

At least one R² among the plurality of R²'s present in the D unit is a group including at least one of an alkyl group or an aryl group.

For example, it is preferable that at least one R³ among the plurality of R³'s present in the D unit is a group including at least one of an alkyl group or an aryl group.

Here, from the viewpoint of suppressing the toner offset, as the group including an alkyl group, for example, an alkyl group itself or a siloxy group including an alkyl group is preferable. That is, at least one of a plurality of R's present in the structure A is, for example, preferably an alkyl group or a siloxy group containing an alkyl group.

From the viewpoint of suppressing the toner offset, the alkyl group is, for example, preferably an alkyl group having 1 or more and 6 or less carbon atoms, and more preferably an alkyl group having 1 or more and 4 or less carbon atoms or an alkyl group having 1 carbon atom (that is, a methyl group).

As the group including an aryl group, for example, an aryl group itself or an aralkyl group is preferable.

Examples of the aryl group include a phenyl group and a naphthyl group.

Examples of an alkyl group in the aralkyl group include a linear or branched alkyl group having 1 or more and 4 or less carbon atoms. Examples of an aryl group in the aralkyl group include a phenyl group and a naphthyl group. Examples of the aralkyl group include a benzyl group, a 1-phenylethyl group, a 2-phenylethyl group, and a 2-methyl-2-phenylethyl group.

From the viewpoint of suppressing the toner offset, as the group including an aryl group, for example, a phenyl group is preferable.

From the viewpoint of suppressing the toner offset, for example, it is preferable that an abundance of the group including at least one of an alkyl group or an aryl group is high.

In the T unit and the D unit, m and n in the formulae represent an integer of 2 or more; and from the viewpoint of suppressing the toner offset, for example, an integer of 8 or more is preferable, and an integer of 8 or more and 10,000 or less is more preferable.

In the T unit and the D unit, the lower limit of a ratio m/n of m and n in the formulae is, for example, preferably 100/0 or more, and more preferably 100/1 or more. In addition, the upper limit of m/n is, for example, preferably 10/90 or less, more preferably 20/80 or less, and still more preferably 25/75 or less.

The ratio m/n, that is, the ratio of the T unit and the D unit is measured as follows. The ratio m/n is calculated based on the peak ratio of the D unit (high ppm side) and the T unit (low ppm side) by solid ²⁹Si NMR.

A content of the T unit with respect to the surface layer is, for example, preferably 20% by volume or more, and more preferably 30% by volume or more. In a case where the content of the T unit with respect to the surface layer is 20% by volume or more, the release properties are improved, and the toner offset is easily suppressed.

However, from the viewpoint of durability, the content of the T unit with respect to the surface layer is, for example, preferably 80% by volume or less, and more preferably 70% by volume or less.

Here, a method of measuring the content of the T unit with respect to the surface layer is as follows.

A sample of the surface layer is obtained from the heating member to be measured.

The sample is filled in a measurement rotor of a solid-state nuclear magnetic resonance (solid-state NMR) analyzer. The measurement is performed by a dipolar decoupling (DD)/magic angle spinning (MAS) method using ²⁹Si as a nuclide, under conditions of an integration number of 64 and an MAS rotation speed of 5 kHz. As a result, the content of the T unit with respect to the surface layer is measured.

Examples of the T unit include a polymer compound structure referred to as silsesquioxane having various skeleton structures.

The T unit may be, as a skeleton structure, any of a cage-type structure (a perfect cage-type structure or a cage-type structure), a ladder-type structure, or a random structure.

In order to achieve the surface layer having the T unit or the surface layer having the T unit and the D unit, the surface layer may contain the siloxane compound having the T unit or the siloxane compound having the T unit and the D unit.

The details of the T unit and the D unit in the siloxane compound are as described above.

The surface layer may be a surface layer containing the polysiloxane compound as a principal component (for example, a matrix material that is to be a binding material), or a surface layer containing the polysiloxane compound as an additive.

Here, the surface layer containing the polysiloxane compound as a principal component (for example, a matrix material that is to be a binding material) refers to a surface layer having the highest amount of the polysiloxane compound on a volume basis.

In a case where the surface layer contains the polysiloxane compound as an additive, the polysiloxane compound is, for example, preferably in a particle shape.

A volume average particle diameter of the particle-shaped polysiloxane compound is, for example, preferably 0.01 µm or more and 10 µm or less, more preferably 0.01 µm or more and 5 µm or less, and still more preferably 0.01 µm or more and 2.5 µm or less. In particular, the volume average particle diameter of the particle-shaped polysiloxane compound is, for example, more preferably 1 µm or less.

In a case where the volume average particle diameter of the particle-shaped polysiloxane compound is within the above-described range, the release properties are improved and the toner offset is easily suppressed.

The volume average particle diameter of the particle-shaped polysiloxane compound is measured as follows.

A sample is collected from the surface layer. The sample is a sample in which a cut surface along a thickness direction of the surface layer is used as an observation surface.

The observation surface of the sample is observed with a scanning electron microscope to capture an image. In the image, an area of each primary particle of the polysiloxane compound is measured by image analysis, and an equivalent circle diameter thereof is calculated from this area value. The calculation of the equivalent circle diameter is carried out for 100 particles of the polysiloxane compound. A 50% diameter (D50v) in the volume-based cumulative frequency of the obtained equivalent circle diameter is defined as the volume average particle diameter of the polysiloxane compound.

### --Inorganic Particles--

As the inorganic particles, inorganic particles having an average particle diameter of 7.0 µm or less are applied.

In a case where the average particle diameter of the inorganic particles is less than 0.1 µm, the abrasion resistance is reduced.

In a case where the average particle diameter of the inorganic particles is more than 7.0 µm, the release properties are reduced.

From the viewpoint of suppressing the toner offset, the average particle diameter of the inorganic particles is, for example, preferably 5.0 µm or less, and more preferably 2.0 µm or less.

However, from the viewpoint of improving the abrasion resistance, the average particle diameter of the inorganic particles is, for example, preferably 0.5 µm or more, and more preferably 1.0 µm or more.

A method of measuring the average particle diameter of the inorganic particles is as follows.

A sample is collected from the surface layer. The sample is a sample in which a cut surface along a thickness direction of the surface layer is used as an observation surface.

The observation surface of the sample is observed with a scanning electron microscope to capture an image. In the image, an area of each primary particle of the polysiloxane compound is measured by image analysis, and an equivalent circle diameter thereof is calculated from this area value. The calculation of the equivalent circle diameter is carried out for 100 particles of the polysiloxane compound. The obtained equivalent circle diameter (µm) is arithmetically averaged. The arithmetic average value is defined as the average particle diameter of the inorganic particles.

Examples of the inorganic particles include particles of a metal, an inorganic carbide, an inorganic oxide, an inorganic sulfide, an inorganic nitride, a metallate, a carbon material, a mineral, or the like.

Examples of the metal include aluminum, iron, copper, nickel, gold, silver, platinum, cobalt, zinc, lead, tin, titanium, chromium, magnesium, manganese, and an alloy of two or more of these metals.

Examples of the inorganic carbide include silicon carbide, boron carbide, and titanium carbide.

Examples of the metal oxide include silica, titania, alumina, tin oxide, magnesium oxide, and iron oxide.

Examples of the inorganic sulfide include molybdenum disulfide, zinc sulfide, and tungsten disulfide.

Examples of the inorganic nitride include boron nitride, aluminum nitride, silicon nitride, and titanium nitride.

Examples of the metallate include barium sulfate, aluminum sulfate, calcium sulfate, magnesium sulfate, aluminum borate, and potassium titanate.

Examples of the carbon material include carbon black, carbon nanotubes, carbon nanofibers, carbon fibers, graphite (natural graphite, artificial graphite, and the like), and fullerene.

Examples of the mineral include mica, talc, and smectite (hectorite, saponite, stevensite, beidellite, montmorillonite, or the like).

Among these, from the viewpoint of suppressing the toner offset and improving the abrasion resistance, the inorganic particles are, for example, preferably silicon carbide particles, carbon black, or alumina particles, and more preferably silicon carbide particles.

In particular, the silicon carbide particles are particles having a high thermal conductivity. Therefore, heat is easily transferred to the toner, and the fixing properties are improved. In addition, the productivity is improved.

A content of the inorganic particles with respect to the surface layer is, for example, preferably 1% by mass or more and 50% by mass or less, and more preferably 3% by mass or more and 30% by mass or less.

In a case where the content of the inorganic particles is within the above-described range, the toner offset is easily suppressed and the abrasion resistance is also easily improved.

### --Binding Material--

The surface layer may contain a binding material for immobilizing the polysiloxane compound and the inorganic particles.

Examples of the binding material include a heat-resistant release material.

Examples of the heat-resistant release material include a silicone resin, a silicone rubber, a polyimide resin, a polyether ether ketone (PEEK) resin, a polyphenylene sulfide (PPS) resin, and a polymethylpentene (PMP) resin.

Among these, as the heat-resistant release material, for example, a silicone resin or a silicone rubber is preferable.

Furthermore, the term "heat-resistant" means a characteristic that melting or decomposition does not occur in a case of reaching a raised temperature of the fixing device (for example, a fixing temperature).

Examples of the silicone resin include a methyl-based straight silicone resin, a methylphenyl-based straight silicone resin, an acrylic resin-modified silicone resin, an ester resin-modified silicone resin, an epoxy resin-modified silicone resin, and an alkyd resin-modified silicone resin.

Examples of the silicone rubber include room temperature vulcanizing (RTV) silicone rubber, high temperature vulcanizing (HTV) silicone rubber, and liquid silicone rubber; and specific examples thereof include polydimethyl silicone rubber, methylvinyl silicone rubber, methylphenyl silicone rubber, and fluorosilicone rubber.

### --Other Additives--

The surface layer may be compounded with other additives. Examples of the additive include a conductive agent, a softener (paraffin-based softener and the like), a processing aid (stearic acid and the like), and an aging inhibitor (amine-based aging inhibitor and the like).

A thickness of the surface layer is, for example, preferably 10 µm or more and 150 µm or less, and more preferably 20 µm or more and 100 µm or less.

The surface layer may have a structure of two or more layers having the T unit and containing inorganic particles. In a case of the surface layer of the structure of two or more layers, the toner offset can be further suppressed by a configuration in which the content of the inorganic particles in the lower layer is higher than that in the upper layer.

### (Pressurizing Roll)

Examples of the pressurizing roll 63 include a roll including a base material, an elastic layer provided on the base material, and a surface layer provided on the elastic layer.

Examples of the base material and the surface layer in the pressurizing roll 63 include the same configurations as the base material and the surface layer in the heating roll 62.

However, the polysiloxane compound having the T unit may not be applied to the surface layer. In addition, the surface layer may not contain the inorganic particles. In addition, the surface layer may be a layer containing the above-described heat-resistant release material.

### -Elastic Layer-

The elastic layer is, for example, an elastic layer that is deformed by an external force of 100 Pa but is restored to the original shape.

The elastic layer may be, for example, a layer containing a heat-resistant elastic material as a principal component.

The layer containing the heat-resistant elastic material as a principal component is a layer in which the heat-resistant elastic material is most contained as a component among components constituting the elastic layer.

The heat-resistant elastic material is an elastic material that does not decompose even at a fixing temperature.

Examples of the heat-resistant elastic material include silicone rubber and the like, that are suitable from the viewpoint of heat resistance, thermal conductivity, insulating properties, and the like.

Examples of the silicone rubber include RTV silicone rubber, HTV silicone rubber, and liquid silicone rubber; and specific examples thereof include polydimethyl silicone rubber (MQ), methyl vinyl silicone rubber (VMQ), methyl phenyl silicone rubber (PMQ), and fluorosilicone rubber (FVMQ).

Examples of a commercially available product of the silicone rubber include liquid silicone rubber SE6744 manufactured by Dow Corning Toray Co., Ltd.

As the silicone rubber, for example, silicone rubber that is crosslinked generally by an addition reaction is preferable. In addition, various types of functional groups are known for silicone rubber, and for example, dimethyl silicone rubber having a methyl group, methyl phenyl silicone rubber having a methyl group and a phenyl group, vinyl silicone rubber having a vinyl group (vinyl group-containing silicone rubber), or the like is preferable. For example, vinyl silicone rubber having a vinyl group is more preferable, and silicone rubber that has an organopolysiloxane structure having a vinyl group and a hydrogen organopolysiloxane structure having a hydrogen atom bonded to a silicon atom (SiH) is still more preferable.

For example, it is preferable that the elastic layer contains, as the heat-resistant elastic material, silicone rubber as a principal component (that is, contains 50% by mass or more of the silicone rubber with respect to the elastic layer). The content of the silicone rubber is, for example, more preferably 90% by mass or more, and still more preferably 99% by mass or more.

In addition to the heat-resistant elastic material, the elastic layer may contain an inorganic filler for the purpose of reinforcement, heat resistance, heat transfer, and the like. Examples of the inorganic filler include known inorganic fillers, and preferred examples thereof include fumed silica, crystalline silica, iron oxide, alumina, and metallic silicon.

A content of the inorganic filler may be determined by the required thermal conductivity, mechanical strength, and the like, and is, for example, 1% by mass or more and 20% by mass or less with respect to the elastic layer, preferably 3% by mass or more and 15% by mass or less, and more preferably 5% by mass or more and 10% by mass or less.

The elastic layer may contain, as an additive, for example, a softener (such as a paraffin-based softener), a processing aid (such as stearic acid), an antioxidant (such as an amine-based antioxidant), a vulcanizing agent (such as sulfur, a metal oxide, and a peroxide), a functional filler (such as alumina), or the like.

A thickness of the elastic layer is, for example, preferably 1 mm or more and 10 mm or less, and more preferably 3 mm or more and 8 mm or less.

### (Peeling Claw)

The peeling claw 64 is composed of, for example, a resin member such as polyether ether ketone (PEEK).

The peeling claw 64 is disposed to come into contact with the heating roll. Therefore, the toner adhering to the heating roll 62 is deposited on the contact portion of the heating roll in the peeling claw 64. In a case where the deposited toner is aggregated to some extent, the toner is re-transferred to the heating roll 62, and black spots occur in the obtained image.

Therefore, for example, it is preferable to provide a surface layer containing a release agent on the surface of the contact portion of the heating roll 62 in the peeling claw.

By providing the surface layer containing the release agent, the toner is less likely to be deposited on the contact portion of the heating roll 62 in the peeling claw 64. As a result, the occurrence of black spots in the obtained image is suppressed.

Examples of the release material include a silicone material, a fluororesin, polymethylpentene, and ultra-high molecular weight polyethylene.

Among these, as the release material, for example, a silicone material is preferable. That is, for example, it is preferable that a surface layer containing a silicone material is provided on the surface of the contact portion with the heating member in the peeling claw.

Examples of the silicone material include a polysiloxane compound having a T unit. In particular, in a case where the polysiloxane compound having the T unit is applied to the surface layer, the surface layer is less likely to be worn as compared with a case where a fluororesin is applied to the surface layer, and thus the occurrence of black spots in the image is suppressed over a long period of time.

However, as the silicone material, a silicone resin, a silicone rubber, or the like, other than the polysiloxane compound having the T unit, may be applied.

A hardness of the surface layer provided on the peeling claw 64 is, for example, preferably lower than a hardness of the surface layer of the heating roll 62.

### (Cleaning Device)

Examples of the cleaning device 68 include a web-type cleaning device including a cleaning web. Examples of the cleaning web include a cleaning web (specifically, nonwoven fabric) consisting of a mixed material of polyamide and polyester.

From the viewpoint of suppressing the abrasion resistance and reducing the toner offset, the cleaning web may contain a small amount of oil. Typical examples of the oil include silicone oil.

Specifically, for example, the cleaning device 68 is composed of a cleaning web 68A, a delivery roll 68B, a winding roll 68C, and a contact roll 68D.

The cleaning web 68A is a series of belt-shaped webs in which the nonwoven fabric is impregnated with the silicone oil. An unused portion of the cleaning web 68A is wound around the delivery roll 68B.

An end part of the cleaning web 68A pulled out from the delivery roll 68B is wound around the winding roll 68C.

The contact roll 68D presses a part of the cleaning web 68A from behind to bring the cleaning web 68A into contact with a peripheral surface of the heating roll 62 between the delivery roll 68B and the winding roll 68C.

The winding roll 68C is driven by a web drive device 68E.

The delivery roll 68B is rotationally driven by a tension transmitted through the cleaning web 68A, and the cleaning web 68A gradually proceeds in an arrow direction.

That is, the cleaning web 68A is brought into contact with the heating roll 62, and rubs and cleans the peripheral surface of the heating roll 62 by peripheral movement of the heating roll 62.

A new portion of the cleaning web 68A is pressed against the peripheral surface of the heating roll 62 at a speed at which the cleaning web 68A is wound around the winding roll 68C.

The web drive device 68E that drives the winding roll 68C controls a traveling speed of the cleaning web 68A.

### (Heating Source)

Examples of the heating source include known heating sources such as a halogen lamp, a ceramic heater, and a carbon heater.

### <Image Forming Apparatus>

Next, the image forming apparatus according to the present exemplary embodiment will be described.

The image forming apparatus according to the present exemplary embodiment includes:
an image holder;
a charging device that charges a surface of the image holder;
an electrostatic latent image forming device that forms an electrostatic latent image on the charged surface of the image holder;
a developing device that accommodates a developer containing a toner and develops the electrostatic latent image formed on the surface of the image holder with the developer to form a toner image;
a transfer device that transfers the toner image onto a surface of a recording medium; and
a fixing device that fixes the toner image on the surface of the recording medium.

As the fixing device, the fixing device according to the present exemplary embodiment is applied.

In the image forming apparatus according to the present exemplary embodiment, the fixing device may be made into each cartridge such that the fixing device is detachable from an image forming apparatus. That is, the image forming apparatus according to the present exemplary embodiment may include the fixing device according to the present exemplary embodiment, as a device configuring a process cartridge.

Hereinafter, the image forming apparatus according to the present exemplary embodiment will be described with reference to a drawing.

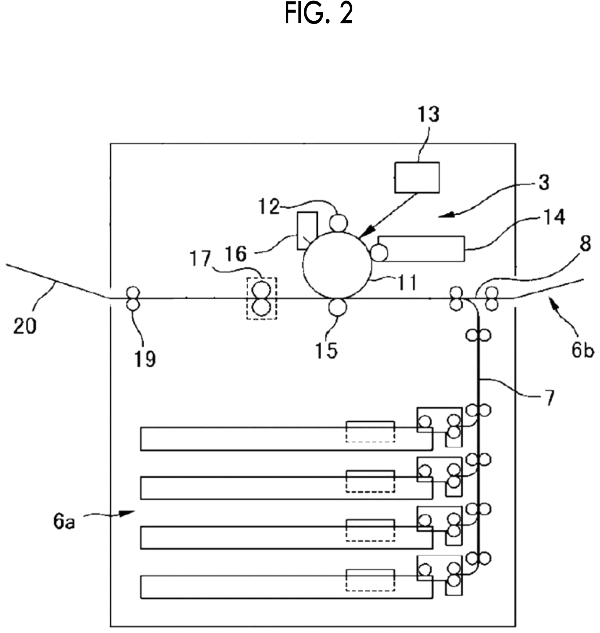

FIG. 2 is a schematic configuration view showing a configuration of the image forming apparatus according to the present exemplary embodiment.

An image forming apparatus 10 according to the present exemplary embodiment is an example of a monochrome image forming apparatus that forms and fixes a monochrome toner image on paper as an example of a recording medium.

As shown in FIG. 2, the image forming apparatus 10 includes an image forming unit 3 that forms an image.

Below the image forming unit 3 in the drawing, a paper supply unit 6a that supplies paper (an example of the recording medium) accommodated therein to the image forming unit 3 one by one is provided.

A manual feed supply unit 6b that can directly supply the paper from the outside is provided on an upstream side of the image forming unit 3 in a paper transport direction. A first paper transport path 7 that transports the paper from the paper supply unit 6a to the image forming unit 3 and a second paper transport path 8 that transports the paper from the manual feed supply unit 6b to the image forming unit 3 are provided. The first paper transport path 7 and the second paper transport path 8 merge on an upstream side of a position where the toner image is transferred from the image forming unit 3 in the paper transport direction.

A fixing device 17 (an example of the fixing device) that heats the toner image on the paper and presses the paper is provided on a downstream side of the image forming unit 3 in the paper transport direction. A paper discharge roller 19 and a paper discharge tray 20 that discharge the paper from the apparatus are provided on a downstream side of the fixing device 17 in the paper transport direction. The paper is discharged to the paper discharge tray 20 by the paper discharge roller 19.

The image forming unit 3 includes a cylindrical photosensitive drum 11 (an example of the image holder) that is charged and then exposed to exposure light to form an electrostatic latent image on the surface due to a difference in electrostatic potential.

Around the photosensitive drum 11, a charging device 12 (an example of the charging device), an exposure device 13 (an example of the electrostatic latent image forming device), a developing device 14 (an example of the developing device), a transfer device 15 (an example of the transfer device), and a cleaning device 16 are provided.

The charging device 12 is a device that charges the surface of the photosensitive drum 11 around the photosensitive drum 11.

The exposure device 13 is a device that exposes the photosensitive drum 11 to the exposure light to form the electrostatic latent image on the surface.

The developing device 14 is a device that selectively transfers the toner to the electrostatic latent image on the photosensitive drum to form a toner image.

The transfer device 15 is a device that transfers the toner image formed on the photosensitive drum 11 to the paper.

The cleaning device 16 is a device for the photosensitive drum that removes the toner remaining on the photosensitive drum 11 after the toner image is transferred.

The image forming apparatus 10 operates, for example, as follows.

The size of the paper that is the recording medium of the image and the number of sheets on which the image is continuously formed are selected based on a signal input by an operator or image information input from another device, and the number of sheets of paper. In addition, the paper accommodated in the paper supply unit 6a and the manual feed supply unit 6b is selected as the paper.

Next, in a case where the paper feeding from the paper supply unit 6a is selected, the set number of sheets of paper are sequentially pulled out from the paper supply unit 6a and transported to the image forming unit 3 by the transport roller through the first paper transport path 7. On the other hand, in a case where the paper feeding from the manual paper supply unit 6b is selected, the set number of sheets of paper are sequentially pulled out from the manual paper supply unit 6b and transported to the image forming unit 3 through the second paper transport path 8.

In the image forming unit 3, the toner image is formed on the photosensitive drum 11, and the toner image is transferred onto the paper fed in synchronization with the timing at the facing portion of the transfer device 15. The paper is fed to the fixing device 17. In the fixing device 17, the toner image is heated and pressed to be fixed on the paper to form a fixed image.

As a result, the image forming apparatus can be used for a long period of time, and the running cost can be reduced.

Although the present exemplary embodiment has been described, the present exemplary embodiment is not limited to the above-described exemplary embodiments, and various modifications, changes, and ameliorations can be added thereto.

### [Examples]

Hereinafter, the present exemplary embodiment will be described in more detail with reference to Examples, but the present exemplary embodiment is not limited to Examples. In the following description, "part" represents "part by mass" unless otherwise specified.

### <Example 1>

A coating liquid having the following formulation is applied onto an aluminum base material having a diameter of 65 mm by a spiral coating method, and irradiated with ultraviolet rays to form a surface layer having a thickness of 60 µm. The formulation of the coating liquid for forming a surface layer is as follows.

### -Formulation of coating liquid for forming surface layer-

· Material of surface layer: polysiloxane compound: "OX-SQ-SI20" manufactured by TOAGOSEI CO., LTD., polysiloxane compound having a T unit represented by the formula: [R¹SiO_{3/2}]ₘ (in the formula, R¹ = a methyl group and an oxetanyl group) and a D unit represented by the formula: (R²R³SiO_{2/2})ₙ (in the formula, R² and R³ = methyl groups): amount such that the T unit is % by volume (with respect to the surface layer) shown in Table 1
· Inorganic particles: silicon carbide particles ("SSC-A01" manufactured by Shinano Electric Refining Co., Ltd., average particle diameter = 1.5 µm): amount corresponding to % by mass (with respect to the surface layer) shown in Table 1

As a result of the above operation, a heating roll is obtained.

Next, the obtained heating roll is mounted on a fixing device of an image forming apparatus ("Revoria Press E1136P" manufactured by FUJIFILM Business Innovation Corp.).

The fixing device of the present image forming apparatus has the same configuration as the fixing device shown in FIG. 1, and is a fixing device including a heating roll, a pressurizing roll, and a peeling claw made of polyether ether ketone (PEEK) resin.

The present image forming apparatus is used as an image forming apparatus of Example 1.

### <Evaluation>

### (Toner Offset)

Toner offset is evaluated as follows using the image forming apparatus of Example 1. However, a cleaning member that cleans the heating roll is removed from the fixing device of the image forming apparatus.

Using the image forming apparatus, 10 black solid half-tone images having an image density of 50% are output on recycled paper GR100 (A3 size) manufactured by FUJIFILM Business Innovation Corp. The level of the toner adhesion to the surface of the tenth paper is observed, and the toner offset is evaluated. The evaluation standards are as follows.

A+: no occurrence of toner offset: the occurrence of the toner offset is not recognized even with a magnifying glass.

A: no occurrence of toner offset: the occurrence of the toner offset is recognized with a magnifying glass, but is not recognized with the naked eye.

B: slight occurrence of toner offset: the occurrence of the toner offset is recognized with careful observation, but is not noticeable in normal use.

C: occurrence of toner offset: the occurrence of the toner offset is recognized with careful observation, and is noticeable in normal use.

D: occurrence of toner offset: the occurrence of the toner offset is visible even from a distance.

### (Abrasion Resistance)

Abrasion resistance of the heating roll is evaluated as follows using the image forming apparatus of Example 1.

Using the image forming apparatus, 1,000,000 black solid half-tone images having an image density of 50% are output on recycled paper GR100 (A3 size) manufactured by FUJIFILM Business Innovation Corp. An abrasion amount of the surface layer of the heating roll is evaluated. The evaluation standards are as follows.

A+: surface layer is not worn (a residual film thickness of the surface layer is 30 µm or more) at the output of 1,000,000 sheets.

A: surface layer is almost worn (a residual film thickness of the surface layer is 5 µm or less) at the output of 1,000,000 sheets.

B: surface layer is worn (a residual film thickness of the surface layer is 5 µm or less) at the output of 800,000 sheets or less.

C: surface layer is worn (a residual film thickness of the surface layer is 5 µm or less) at the output of 500,000 sheets or less.

D: surface layer is worn (a residual film thickness of the surface layer is 5 µm or less) at the output of 100,000 sheets or less.

### <Examples 2 to 14 and Comparative Examples 3 and 4>

A heating roll is obtained in the same manner as in Example 1, except that the following items at the time of forming the surface layer are changed according to Table 1.
· Type and amount of material of surface layer (amount is a content with respect to the surface layer)
· Type and amount of inorganic particles (amount is a content with respect to the surface layer)

The obtained heating roll is mounted on the fixing device of the same image forming apparatus as in Example 1 to obtain an image forming apparatus of each example.

Each evaluation is performed using the obtained image forming apparatus in the same manner as in Example 1.

However, in Table 1, in an example in which SQ2 is used as the material of the surface layer, the surface layer is formed by heating at 120°C for 10 minutes and further heating at 170°C for 10 minutes, instead of ultraviolet irradiation.

### <Comparative Example 1>

A heating roll in which a silicone rubber layer is provided is obtained on an aluminum base material having a diameter of 65 mm in the same manner as in Example 1.

The obtained heating roll is mounted on the fixing device of the same image forming apparatus as in Example 1 to obtain an image forming apparatus of Comparative Example 1.

Each evaluation is performed using the obtained image forming apparatus in the same manner as in Example 1.

### <Comparative Example 2>

In the fixing device of the image forming apparatus of Comparative Example 1, an oil supply device that supplies dimethyl silicone oil to the surface of the heating roll at a supply amount of 20 µL/A4 is mounted.

The image forming apparatus is used as an image forming apparatus of Comparative Example 2.

Each evaluation is performed using the obtained image forming apparatus in the same manner as in Example 1.

### <Examples 101 to 103>

### (Example 101)

A peeling claw in which a surface layer is formed on a surface of a contact portion with the heating member as follows is prepared.

A peeling claw made of PEEK, having a width of 8 mm, is dipped in the coating liquid for forming a surface layer of Example 1 (in which the coating liquid does not contain inorganic particles), and pulled up to form a surface layer having a thickness of 30 µm.

The obtained peeling claw is mounted on the fixing device of the same image forming apparatus as in Example 1.

The obtained image forming apparatus is used as an image forming apparatus of Example 101.

### (Example 102)

As the image forming apparatus of Example 102, the same apparatus as the image forming apparatus of Example 1 is prepared.

### (Example 103)

A peeling claw in which a surface layer consisting of a tetrafluoroethylene perfluoroalkyl vinyl ether copolymer (PFA), having a thickness of 30 µm, is formed on the surface of the contact portion with the heating member is prepared.

The obtained peeling claw is mounted on the fixing device of the same image forming apparatus as in Example 1.

The obtained image forming apparatus is used as an image forming apparatus of Example 103.

### (Evaluation)

Each evaluation is performed using the image forming apparatuses of Examples 101 to 103 in the same manner as in Example 1. In addition, occurrence status of black spots at the initial stage and over time is evaluated as follows.

### -Black Spot-

Using the image forming apparatus, 1,000,000 black solid half-tone images having an image density of 50% are output on recycled paper GR100 (A3 size) manufactured by FUJIFILM Business Innovation Corp.

The occurrence status after the output of 1,000 sheets is evaluated as the initial occurrence status of the black spot, and the occurrence status of the black spot after the output of 1,000,000 sheets is evaluated as the occurrence status of the black spot over time, according to the following evaluation standard.
A: no black spot
B: slight occurrence of black spots (1 or 2 black spots on A3 size paper)
C: occurrence of black spots (approximately 3 to 5 black spots on A3 size paper)
D: occurrence of black spots (6 or more black spots on A3 size paper)

### <Used Materials>

Details of the materials used in each example are as follows.
· SQ1: "OX-SQ-SI20", TOAGOSEI CO., LTD., polysiloxane compound having a T unit represented by the formula: [R¹SiO_{3/2}]ₘ (in the formula, R¹ = a methyl group and an oxetanyl group) and a D unit represented by the formula: (R²R³SiO_{2/2})ₙ (in the formula, R² and R³ = methyl groups)
· SQ2: "SR-13H", KONISHI CHEMICAL IND CO., LTD., polysiloxane compound having only T unit represented by the formula [R¹SiO_{3/2}]ₘ (in the formula, R¹ = a methyl group)
· Silicon carbide particles 1: ("SSC-A01" manufactured by Shinano Electric Refining Co., Ltd., average particle diameter = 1.5 µm)
· Silicon carbide particles 2: ("GP#2000" manufactured by Shinano Electric Refining Co., Ltd., average particle diameter = 7.0 µm)
· Silicon carbide particles 3: ("Silicon carbide-594911" manufactured by Sigma-Aldrich Co., LLC, average particle diameter = 0.1 µm)
· Silicon carbide particles 4: ("GP#1200" manufactured by Shinano Electric Refining Co., Ltd., average particle diameter = 10.0 µm)

**[Table 1]**

| | Material of surface layer | Resin particles | | | T unit ([R¹SiO_{3/2}]ₘ) | Presence or absence of oil supply | Evaluation | |
|---|---|---|---|---|---|---|---|---|
| | | | | | | | Toner offset | Abrasion resistance of heating roll |
| | Type | Type | Average particle diameter | % by mass (with respect to surface layer) | Amount | | | |
| | | | µm | | % by volume (with respect to surface layer) | | - | - |
| Example 1 | SQ1 | Silicon carbide particles 1 | 1.5 | 10 | 30 | N | A+ | A+ |
| Example 2 | SQ1 | Silicon carbide particles 1 | 1.5 | 20 | 30 | N | A | A+ |
| Example 3 | SQ1 | Silicon carbide particles 1 | 1.5 | 10 | 10 | N | B | A+ |
| Example 4 | SQ1 | Silicon carbide particles 1 | 1.5 | 10 | 20 | N | A | A+ |
| Example 5 | SQ1 | Silicon carbide particles 1 | 1.5 | 10 | 80 | N | A+ | A |
| Example 6 | SQ1 | Silicon carbide particles 1 | 1.5 | 1 | 30 | N | A+ | B |
| Example 7 | SQ1 | Silicon carbide particles 1 | 1.5 | 3 | 30 | N | A+ | B |
| Example 8 | SQ1 | Silicon carbide particles 1 | 1.5 | 20 | 30 | N | A | A |
| Example 9 | SQ1 | Silicon carbide particles 1 | 1.5 | 30 | 30 | N | B | A+ |
| Example 10 | SQ1 | Silicon carbide particles 2 | 7.0 | 10 | 30 | N | A | A+ |
| Example 11 | SQ1 | Silicon carbide particles 3 | 0.1 | 10 | 30 | N | A+ | B |
| Example 12 | SQ1 | Carbon black | 1.5 | 10 | 30 | N | B | B |
| Example 13 | SQ1 | Alumina particles | 1.5 | 10 | 30 | N | B | A+ |
| Example 14 | SQ2 | Silicon carbide particles 1 | 1.5 | 10 | 10 | N | A | A+ |
| Comparative Example 1 | Silicone rubber | - | - | - | 0 | N | D | D |
| Comparative Example 2 | Silicone rubber | - | - | - | 0 | Y | B | C |
| Comparative Example 3 | SQ1 | - | - | - | 30 | N | A+ | C |
| Comparative Example 4 | SQ1 | Silicon carbide particles 4 | 10.0 | 10 | 30 | N | C | A+ |

**[Table 2]**

| | Base example | Surface of peeling claw | Evaluation | | | |
|---|---|---|---|---|---|---|
| | | Material | Toner offset | Abrasion resistance of heating roll | Black spot occurrence status | |
| | | | | | Initial stage | Over time |
| Example 101 | Example 1 | SQ1 | A+ | A+ | A | B |
| Example 102 | Example 1 | No surface layer | A+ | B | C | D |
| Example 103 | Example 1 | PFA | A+ | A | A | c |

From the above results, it is found that the present example suppresses the toner offset and has high abrasion resistance of the heating member as compared with Comparative Examples.

In addition, it is found that the occurrence of black spots is suppressed in Example 101 in which the surface layer containing the silicone material is provided on the contact portion with the heating member in the peeling claw.

The present exemplary embodiments include the following aspects.
(((1))) A fixing device comprising:
   a heating member that has a base material and a surface layer provided on the base material;
   a pressurizing member that comes into contact with the heating member and applies pressure to the heating member; and
   a peeling claw that is provided on a downstream side of the heating member in a rotation direction of the heating member with respect to a contact portion between the heating member and the pressurizing member, and peels a recording medium that is passed through the contact portion between the heating member and the pressurizing member from the heating member by coming into contact with the heating member,
   wherein the surface layer of the heating member is a layer having a T unit represented by a formula: [R¹SiO_{3/2}]ₘ (in the formula, R¹ represents an organic group, and m represents an integer of 2 or more), and contains inorganic particles having an average particle diameter of 7.0 µm or less.
(2) The fixing device according to (((1))),
   wherein a content of the T unit with respect to the surface layer is 20% by volume or more.
(((3))) The fixing device according to (((2))),
   wherein the content of the T unit with respect to the surface layer is 30% by volume or more.
(((4))) The fixing device according to any one of (((1))) to (((3))),
   wherein a content of the inorganic particles with respect to the surface layer is 3% by mass or more and 20% by mass or less.
(((5))) The fixing device according to (((4))),
   wherein the content of the inorganic particles with respect to the surface layer is 10% by mass or more and 15% by mass or less.
(((6))) The fixing device according to any one of (((1))) to (((5))),
   wherein the inorganic particles are silicon carbide particles.
(((7))) The fixing device according to any one of (((1))) to (((6))),
   wherein a surface layer containing a silicone material is provided on a surface of the contact portion with the heating member in the peeling claw.
(((8)) An image forming apparatus comprising:
   an image holder;
   a charging device that charges a surface of the image holder;
   an electrostatic latent image forming device that forms an electrostatic latent image on the charged surface of the image holder;
   a developing device that accommodates a developer containing a toner and develops the electrostatic latent image formed on the surface of the image holder with the developer to form a toner image;
   a transfer device that transfers the toner image onto a surface of a recording medium; and
   the fixing device according to any one of (((1))) to (((7))), that fixes the toner image on the surface of the recording medium.

The effects of the above-described aspects are as follows.

According to (((1))), there is provided a fixing device in which toner offset is suppressed and a heating member has high abrasion resistance, as compared with a case where, in the specific fixing device, the surface layer of the heating member is a layer having the T unit represented by the formula: [R¹SiO_{3/2}]ₘ, and does not contain inorganic particles or contains inorganic particles having an average particle diameter of more than 7.0 µm.

According to (((2))), there is provided a fixing device in which toner offset is suppressed and a heating member has high abrasion resistance, as compared with a case where the content of the T unit with respect to the surface layer is less than 20% by volume.

According to (((3))), there is provided a fixing device in which toner offset is suppressed and a heating member has high abrasion resistance, as compared with a case where the content of the T unit with respect to the surface layer is less than 30% by volume.

According to (((4))), there is provided a fixing device in which toner offset is further suppressed and a heating member has high abrasion resistance, as compared with a case where the content of the inorganic particles with respect to the surface layer is less than 3% by mass or more than 20% by mass.

According to (((5))), there is provided a fixing device in which toner offset is further suppressed and a heating member has high abrasion resistance, as compared with a case where the content of the inorganic particles with respect to the surface layer is less than 10% by mass or more than 15% by mass.

According to (((6))), there is provided a fixing device in which toner offset is further suppressed and a heating member has high abrasion resistance, as compared with a case where the inorganic particles are carbon black.

According to (((7))), there is provided a fixing device in which occurrence of black spots is suppressed together with toner offset and a heating member has high abrasion resistance, as compared with a case where the surface layer containing a silicone material is not provided on the surface of the contact portion with the heating member in the peeling claw.

According to (((8))), there is provided an image forming apparatus including a fixing device in which toner offset is suppressed and a heating member has high abrasion resistance, as compared with a case of including a fixing device in which, in the specific fixing device, the surface layer of the heating member is a layer having the T unit represented by the formula: [R¹SiO_{3/2}]ₘ, and does not contain inorganic particles or contains inorganic particles having an average particle diameter of more than 7.0 µm.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: image forming apparatus
12: accommodation portion
14: transport portion
18: discharge portion
16: fixing device (example of fixing device)
20: toner cartridge
30: image forming unit
32: photosensitive drum (example of image holder)
34: charging roll (example of charging device)
36: exposure device (example of electrostatic latent image forming device)
38: transfer roll (example of transfer device)
40: developing device (example of developing device)
60: fixing device (example of fixing device)
62: heating roll
63: pressurizing roll
64: peeling claw
66: heating source
68: cleaning device

## Claims

1. A fixing device comprising:
a heating member that has a base material and a surface layer provided on the base material;
a pressurizing member that comes into contact with the heating member and applies pressure to the heating member; and
a peeling claw that is provided on a downstream side of the heating member in a rotation direction of the heating member with respect to a contact portion between the heating member and the pressurizing member, and peels a recording medium that is passed through the contact portion between the heating member and the pressurizing member from the heating member by coming into contact with the heating member,
wherein the surface layer of the heating member is a layer having a T unit represented by a formula: [R¹SiO_{3/2}]ₘ (in the formula, R¹ represents an organic group, and m represents an integer of 2 or more), and contains inorganic particles having an average particle diameter of 7.0 µm or less.

2. The fixing device according to claim 1,
wherein a content of the T unit with respect to the surface layer is 20% by volume or more.

3. The fixing device according to claim 2,
wherein the content of the T unit with respect to the surface layer is 30% by volume or more.

4. The fixing device according to any one of claims 1 to 3,
wherein a content of the inorganic particles with respect to the surface layer is 3% by mass or more and 20% by mass or less.

5. The fixing device according to claim 4,
wherein the content of the inorganic particles with respect to the surface layer is 10% by mass or more and 15% by mass or less.

6. The fixing device according to any one of claims 1 to 5,
wherein the inorganic particles are silicon carbide particles.

7. The fixing device according to any one of claims 1 to 6,
wherein a surface layer containing a silicone material is provided on a surface of the contact portion with the heating member in the peeling claw.

8. An image forming apparatus comprising:
an image holder;
a charging device that charges a surface of the image holder;
an electrostatic latent image forming device that forms an electrostatic latent image on the charged surface of the image holder;
a developing device that accommodates a developer containing a toner and develops the electrostatic latent image formed on the surface of the image holder with the developer to form a toner image;
a transfer device that transfers the toner image onto a surface of a recording medium; and
the fixing device according to any one of claims 1 to 7, that fixes the toner image on the surface of the recording medium.
